# EUROPEAN PATENT SPECIFICATION

(11) **EP 3 390 325 B1**
(45) Date of publication and mention of the grant of the patent: **03.06.2020**
(21) Application number: 16825577.6
(22) Date of filing: 16.12.2016
(51) Int. Cl.: C05F 11/08

(54) **FERTILIZER COMPRISING BACTERIA AND PROTOZOA.**
DÜNGEMITTEL MIT BAKTERIEN UND PROTOZOEN
ENGRAIS COMPRENANT DES BACTÉRIES ET DES PROTOZOAIRES

(30) Priority: 17.12.2015 NL 2015980
(43) Date of publication of application: 24.10.2018
(73) Proprietor: Ecostyle B.V., 8431 SM Oosterwolde (NL)
(72) Inventor: LOZNIK, Brenda, 9401 JR Assen (NL); OOSTERKAMP, Pier Jouke, 9422 HS Smilde (NL)
(74) Representative: V.O.
(86) International application number: PCT/NL2016/050881
(87) International publication number: WO 2017/105238

(56) References cited:
- WO-A1-2014/043604
- WO-A1-2015/199541
- L E Casida ET AL: "Protozoan Response to the Addition of Bacterial Predators and Other Bacteria to Soilt", , 1 January 1989 (1989-01-01), pages 1857-1859, XP055298153, Retrieved from the Internet: URL:http://www.ncbi.nlm.nih.gov/pmc/articl es/PMC202969/pdf/aem00101-0011.pdf
- MICHAEL BONKOWSKI ET AL: "Microbial-faunal interactions in the rhizosphere and effects on plant growth", EUROPEAN JOURNAL OF SOIL BIOLOGY, vol. 36, no. 3-4, 1 July 2000 (2000-07-01) , pages 135-147, XP055215219, ISSN: 1164-5563, DOI: 10.1016/S1164-5563(00)01059-1
- MICHAEL BONKOWSKI: "Protozoa and plant growth: the microbial loop in soil revisited", NEW PHYTOLOGIST, vol. 162, no. 3, 1 June 2004 (2004-06-01), pages 617-631, XP055091798, ISSN: 0028-646X, DOI: 10.1111/j.1469-8137.2004.01066.x

## Description

The invention relates to agriculture and horticulture. In particular, it relates to organic fertilizers in a granular, powdered or pelleted form.

Organic fertilizers are fertilizers derived from animal or plant matter. They can be naturally occurring such as manure and sludge, or processed from waste materials such as hoofs, bones, feathers, cottonseeds, and soybeans. Organic fertilizers consist of relatively simple molecules such as amino acids and monosaccharides, and of more complex molecules such as proteins, collagen and polysaccharides. These organic molecules contain large amounts of carbon, nitrogen, phosphorous and potassium as well as other elements that are essential for plant growth and development. When these organic materials are returned to the soil, they undergo decomposition. This is predominantly a biological process that includes the physical breakdown and biochemical transformation of the complex organic molecules into smaller organic molecules and inorganic elements. The rate of decomposition of the organic materials provided by organic fertilizers is determined by several factors. For example the quality of the organic material, the soil (micro)organisms present and the physical environment (e.g. moisture and temperature).

The carbon-rich organic matter provided by the organic fertilizer serves as a food source for microorganisms and thereby stimulates microbial growth. As microorganisms break down the carbon-rich organic matter, excess nutrients are released into the soil in inorganic forms that can easily be taken up by plants. This process is called mineralization.

Nitrogen is considered to be the main limiting plant nutrient. In nature, nitrogen can be present in a variety of forms, including organic forms (e.g. nucleic acids, amino acids), ammonium (NH₄⁺), nitrite (NO₂⁻), nitrate (NO₃⁻), nitric oxide (NO), nitrous oxide (N₂O) and nitrogen gas (N₂). Plants generally absorb nitrogen in the form of ammonium or nitrate. Ammonification is the process by which organically bound nitrogen is mineralized to ammonium. Nitrification is the process by which ammonium is oxidized to nitrite by bacteria in the genus *Nitrosomonas.* This nitrite is then rapidly oxidized to nitrate by bacteria in the *Nitrobacter* genus. Nitrate is a highly soluble nutrient that is easily absorbed by plant roots but is also easily lost due to leaching.

As a result of the relatively slow decomposition and mineralization processes, organic fertilizers continue to release nutrients over time, thereby feeding plants over the course of several months. Apart from their effects on biological soil components, organic fertilizers also affect several edaphic soil characteristics. Through the action of soil organisms, part of the organic material is converted to organic matter, which is known for its soil-improving characteristics. The organic matter causes soil particles to aggregate. As a result, pores of varying shapes and sizes arise which can be filled with water or air. The pores not only form habitats for aerobic and anaerobic bacteria, but also provide the plant roots with the oxygen that is required for respiration. The presence of pores also facilitates water infiltration in times of heavy rain. Apart from providing the plants with nutrients, organic fertilizers also improve plant growth indirectly since roots grow best in the crumbly soil that results from the aggregation of soil particles. The organic matter itself functions as a sponge that greatly increases the water-holding capacity of the soil. The organic matter also functions as a reservoir of nutrients which can be released into the soil over time. Organic fertilizers therefore not only stimulate plant and microbial growth directly but also indirectly by improving several soil characteristics.

The rate of decomposition of organic material is amongst other factors dependent on the carbon to nitrogen (C/N) ratio of the organic material. Decomposition of organic material with a high C/N ratio can lead to the immobilization of nitrogen in microbial biomass. This reduces the amount of nitrogen available to plants. Some organic fertilizers are inoculated with bacteria and/or fungi that assist in the mineralization of the organic material, stimulate plant growth through the production of plant hormones, facilitate the uptake of nutrients and/or suppress pathogens. For example, WO2012/047081 discloses a composition in the form of pelletized granules based on spores and mineral clays for its use in agriculture comprising: (a) a mixture of spores of endomycorrhizal fungi, (b) a mixture of mineral clay in a proportion of between 59% and 75% in weight of the composition and (c) a binder in a proportion of between 10 and 12% in weight of the composition. Preferred endomycorrhizal fungi include *Glomus constrictum, Glomus fasciculatum, Glomus geosporum, Glomus intraradices and Glomus tortuosum,* and mixtures thereof. WO 2014/043604 A1 discloses a fertilizing composition comprising an organic source of N, P and K, agriculturally beneficial bacteria such as *Bacillus lichenformis* or *Bacillus amyloliquefaciens* and protozoa such as *Cercomonas.*

Unfortunately, the efficacy of fertilizers supplemented with bacteria is often limited by the low persistence of the bacteria in the soil. Soil, and in particular the small area of soil around the roots which is called 'the rhizosphere', is a highly competitive environment and the introduced bacteria must not only compete with the indigenous microflora, but also resist predation from a variety of soil (micro)organisms.

Overall, it would be desirable to improve the survival chances of the introduced beneficial bacteria in the organic fertilizer and to improve the mineralization of the organic material provided by the organic fertilizer. Plant growth and plant health could be further enhanced by forcing the species composition of the native microflora to shift towards species that are beneficial to plants, e.g. more nitrifying bacteria, plant growth-promoting bacteria and/or species that produce metabolites that are active against soil-borne pathogens.

It was found that at least some of the above goals can be met by further supplementing fertilizers comprising beneficial bacteria with specific protozoa which graze on (soil) bacteria resulting in the continuous remobilization of plant-essential nutrients as well as an improved survival or activity of the added beneficial bacteria once they enter the soil. The best results were obtained when the selected PGPR and protozoa have a positive influence on each other, e.g. that they are compatible or even act synergistically. For example, the bacteria can defend themselves against protozoan grazing; the protozoa are not capable of affecting the bacteria because the bacteria can for example form biofilms; or the protozoa do graze on the bacteria but this grazing increases the growth rate or activity of the remaining bacteria. More in particular, the addition of cysts of protozoa belonging the genus *Rosculus* to an organic fertilizer comprising *Bacillus* species surprisingly resulted in an increased plant growth (biomass) and mineralization of organic material, as well as an improved establishment of the *Bacillus* bacteria.

Accordingly, the invention provides a fertilizer composition in a granular, powdered or pelleted form, comprising (i) an organic source of nitrogen, phosphorus and/or potassium, (ii) Plant-Growth Promoting Rhizobacteria (PGPR) in the form of spores or cysts, wherein the PGPR is a *Bacillus* species and (iii) protozoa in the form of cysts, wherein the protozoa belong to the genus *Rosculus.* The addition of *Rosculus* sp. to organic fertilizers increases the efficacy of the fertilizer and promotes plant growth by stimulating the mineralization of organic material and improving the survival chances of the added *Bacillus* bacteria. More in particular, the combination of *Bacillus* and *Rosculus* resulted in a significant increase in shoot biomass, a reduction in the root/shoot ration (indicative of more favourable growth conditions), and an increase in colonization of *Bacillus* bacteria on roots.

GB1288122 relates to the decomposition of agricultural waste materials into constituents useful for animal or plant nutrition. Disclosed is a method of controlling the decomposition of organic materials containing polysaccharide constituents, comprising contacting the organic material in an inanimate environment with a symbiotic mixture of microflora capable of metabolizing cellulose and sufficient protozoa capable of feeding on both the cellulose-metabolizing microflora and putrefactive microorganisms to maintain a stable population of said cellulose-metabolizing microflora.

However, the advantage of adding *Rosculus* cysts to an organic fertilizer comprising *Bacillus* species in order to improve the efficacy of the fertilizer, to increase the survival chances or activity of the added beneficial bacteria and to enhance plant growth and/or health by changing the composition or activity of soil microorganisms, has not been taught or suggested in the art.

WO2013/176777 relates to a bio-organo-phosphate fertilizer supplemented with "phosphorus solubilizing" and "plant growth regulating" microorganisms, like algae, bacteria, protozoa, fungi. WO2013/176777 is silent about protozoa cysts, and also fails to teach which (combination of) genera/species of microorganisms can be used.

AU2010202667 relates to a soil enhancing material for promoting the growth and/or development of a plant, the soil enhancing material comprising at least one viticulture material. The material may be supplemented with composting microorganisms, such as bacteria, fungi, algae and or protozoa. Nothing is mentioned about protozoa in the form of cysts. AU2010202667 is silent about the specific combination of bacteria / protozoa as disclosed in the present invention.

WO2014/043604 discloses a fertilizing composition comprising an organic source of N, P and/or K, agriculturally beneficial bacteria and protozoa in the form of cysts. Disclosed are long lists of exemplary bacteria and protozoa. Whereas *Bacillus* species are mentioned, preferred bacteria are *Pseudomonas fluorescens* and *Sinorhizobium meliloti.* According to WO2014/043604, the protozoan may be of the genus *Acanthamoeba, Dictyostelium, Heteromita, Vahlkampfla, Stachyamoeba, Proleptomonas,* Class COLPODEA, *Thecamonas, Bodo, Neobodo, Dimastigella, Rhynchomonas, Ochromonas, Spumella, Tetrahymena, Euplotes, Blepharisma,, Vorticella, Hartmannella, Phalansterium, Colpoda, Cercomonas, Phalansterium,* and combinations thereof. WO2014/043604 is silent about protozoa of the *Rosculus* genus, let alone that it teaches or suggests the specific combination of *Bacillus* sp. bacteria and cysts of a *Rosculus* sp.

In one embodiment, the protozoa of the *Rosculus* genus for use in the present invention are selected from *Rosculus ithacus, Rosculus terrestris, Rosculus elongata* and *Rosculus macrobrachii.* In a preferred aspect, the *Rosculus* sp. is *Rosculus ithacus.* In another preferred aspect, the *Rosculus sp.* is *Rosculus terrestris.*

The beneficial bacteria in a fertilizer composition according to the invention can be any *Bacillus* species considered as Plant-Growth Promoting Rhizobacteria (PGPR). PGPR are typically defined based on their functional activities as (a) biofertilizers (increasing the availability of nutrients to a plant), (b) phytostimulators (plant growth promotion, generally through the production plant hormones), (c) rhizoremediators (degrading organic pollutants) and/or (d) biopesticides (controlling diseases, mainly by the production of antibiotics and antifungal metabolites). Furthermore, a single PGPR will often reveal multiple modes of action. One or more distinct PGPR can be used.

Preferred *Bacillus* species for use in the present invention include *B. amyloliquefaciens, B. atrophaeus, B. cereus, B. circulans, B. coagulans, B. licheniformis, B. luciferensis, B. megaterium, B. mucilaginosus, B. mycoides, B. pasteurii, B. polymyxa, B. pumilus, B. sphaericus, B. subtilis* and *B. thuringiensis.* Particularly preferred are *Bacillus subtilis, Bacillus pumilus, Bacillus amyloliquefaciens, Bacillus megaterium, Bacillus mycoides, Bacillus cereus, Bacillus thuringiensis* and/or *Bacillus licheniformis.* Combinations of one or more *Bacillus* species are also envisaged.

Non-limiting examples of further beneficial bacteria with biofertilizer potential for use in the present invention are listed in Table 1.

Apart from their roles as biofertilizers, PGPR can also play a role as biostimulants and/or bioprotectants. Species in, for example, the genera *Azospirillum, Bacillus, Pseudomonas,* and *Rhizobium* can produce plant hormones such as IAA, gibberelline or cytokines as well as other substances such as 2.3-butanediol that can stimulate plant development. Promotion of lateral root development and an increased uptake of nutrients as a result of auxin production by PGPR have often been reported.

As said, apart from direct plant growth-promoting effects, PGPR can also stimulate plant growth through the suppression of pathogens. PGPR can antagonize deleterious microorganisms through the secretion of lytic enzymes and antibiotics and through competition for nutrients or space. PGPR are also known to activate the immune response of plants, a phenomenon called 'induced systemic resistance' (ISR). The expression of ISR can involve several physiological mechanisms. For example, ISR can increase a plant's tolerance to pathogens which suppresses the expression of symptoms. Other mechanisms include escape as a result of growth promotion and resistance through the reinforcement of cell walls or the induction of Pathogenesis-related (PR) proteins. Non-limiting examples of PGPR with potential as biostimulants or bioprotectants for use in organic fertilizers are listed in Table 1.

The beneficial bacteria may be prepared using any suitable method known to the person skilled in the art, such as, solid state or liquid fermentation using a suitable carbon source. To ensure the stability of the fertilizer, the bacteria are added to the fertilizer in the form of cysts or spores. A fertilizer composition may comprise beneficial bacteria in an amounts of 10exp1 to 10exp10, like 10exp3 to 10exp10, spores or colony forming units per gram of composition. Preferably, it comprises 10 exp5 to 10exp10 spores or colony forming units per gram of composition, more preferably a total of 10 exp6 to 10exp9.

**Table 1: Effects of exemplary PGPR for use in the organic fertilizer**

| ***Genus*** | ***Bioprote ctant*** | ***Biofertilizer*** | ***Biostimulant*** | ***Exemplary species*** |
|---|---|---|---|---|
| *Acinetobacter* | x | | | *A. calcoaceticus* |
| *Arthrobacter* | x | | x | *A. globiformis* and *A. nicotianae* |
| *Azoarcus* | | x | | *A. communis* and *A. indigens* |
| *Azospirillum* | x | x | x | *A. amazonense, A. brasilense, A. canadensis, A. doebereinerae, A. halopraeferens, A. irakense, A. largimobile, A. lipoferum, A. melinis* and *A. oryzae* |
| | | | | |
| *Azotobacter* | x | x | x | *A. armeniacus, A. beijerinckii, A. chroococcum, A. nigricans, A. paspali, and A. vinelandii* |
| | | | | |
| *Bacillus* | x | x | x | *B. amyloliquefaciens, B. atrophaeus, B. cereus, B. circulans, B. coagulans, B. licheniformis, B. luciferensis, B. megaterium, B. mucilaginosus, B. mycoides, B. pasteurii, B. polymyxa, B. pumilus, B. sphaericus, B. subtilis* and *B. thuringiensis* |
| | | | | |
| *Beijerinckia* | | x | x | *B. derxii* and *B. mobilis* |
| *Bradyrhizobium* | | x | x | *B. elkanii* and *B. japonicum* |
| *Burkholderia* | x | x | x | *B. brasilensis, B. cepacia, B. kururiensis, B. unamae* and *B. vietnamiensis* |
| | | | | |
| *Enterobacter* | x | x | | *E. aerogenes, E. asburiae* and *E. cloacae* |
| | | | | |
| *Frankia* | | x | | *Frankia* sp. |
| *Gluconacetobacter* | | x | | *G. diazotrophicus* |
| *Klebsiella* | | x | | *K. aerogenes* |
| *Pseudomonas* | x | x | x | *P. aeruginosa, P. cepacia, P. fluorescens, P. lutea, P. mendocina, P. putida, P. stutzeri* and *P. thivervalensis* |
| | | | | |
| *Rhizobium* | | x | x | *Rhizobium* sp. |
| *Serratia* | x | x | x | *S. liquefaciens, S. marcescens, S. plymuthica* and *S*. *proteamaculans* |
| | | | | |
| *Streptomyces* | x | x | | *S. anulatus, S. coelicolor, S. griseoviridis, S. lydicus* and *S. pilosus* |

Protozoa are aquatic organisms and need thin water films or water-filled pores to survive. In order to ensure that viable protozoa remain present in the organic fertilizer of the invention, they are added in the form of cysts. In nature many protozoa can transform from an actively grazing form (trophozoite) into metabolically inactive cysts when confronted with stress conditions such as starvation or changes in osmolarity. The cysts preserve viability of the protozoa until more favorable conditions arise and the cyst returns to its trophozoite form. Cysts can excyst after several decades and emerge as viable trophozoites.

Protozoa are unicellular eukaryotic microorganisms that range in size between 2 and 200 µm. Based on the morphology of their locomotion, they can be further grouped into amoebae, flagellates and ciliates. Protozoa are considered to be the most important predators of bacteria in soils, particularly in the rhizosphere where the microbial biomass is generally higher as a result of carbon-rich root exudates. Microorganisms in the rhizosphere compete for nutrients with plant roots. During microbial growth, nutrients are temporarily locked up in bacterial biomass. Protozoan grazing on these bacteria stimulates microbial mineralization and thus increases the availability of nutrients to plants. The addition of protozoa to organic fertilizers thus stimulates mineralization and makes the decomposition of organic material less dependent on the C/N ratio. This greatly improves the efficacy of the fertilizer.

Protozoa are selective grazers, favoring certain bacterial species over others. The phenomenon of grazing-induced changes in microbial composition has been reported by several authors. For example, populations of Gram-negative bacteria often decrease as a result of protozoan grazing while Gram-positive bacteria benefit (Rønn *et al.* 2002). The cell wall of Gram-positive bacteria may be harder to digest, which may enable these bacteria to survive when they pass through protozoan cells. Protozoan grazing also often stimulates nitrifying bacteria, presumably because protozoa selectively graze on their faster-growing competitors (Griffiths 1989; Verhagen *et al.* 1995; Alphei *et al.* 1996). Others reported a stimulation of auxin-producing bacteria in the rhizosphere, which resulted in a highly branched root system (Bonkowski and Brandt 2002). Protozoa have also been reported to prefer to graze on senescent bacteria, thereby increasing the contribution of younger strains with a higher metabolic activity (Alphei et al. 1996). High grazing pressure also stimulates the contribution of grazing-resistant bacteria. Certain bacteria are able to produce anti-protozoan metabolites that can also be active against soil pathogens. Protozoa may therefore prefer to consume bacteria that do not produce these metabolites, thereby indirectly increasing the contribution of bacteria that can inhibit soil pathogens (Müller et al. 2013). Thus, apart from their general effects on mineralization, protozoa can also be used to steer the composition of the microflora towards species that are beneficial to plants.

A fertilizer of the invention is characterized by the combined presence of beneficial bacteria at least comprising a *Bacillus* species, and protozoa of the genus *Rosculus* in the form of cysts.
It was surprisingly observed that a fertilizer comprising a combination of *Rosculus* cysts with cysts of one or more additional protozoa selected from the group comprising *Neocercomonas* sp., *Cercomonas* sp., *Sandona* sp. and *Bodomorpha* sp., has advantageous properties. For example, a mixture of *Rosculus* and one further protozoa showed an unexpected synergistic effect on plant growth on both sandy and clay soils. Interestingly, the total dose of cysts could be reduced nearly 10-fold when a protozoa mixture was used as compared to a single protozoa genus.

In one aspect, a species from the genus *Neocercomonas* is used, for example selected from *Neocercomonas jutlandica, Neocercomonas sp. strain 10-3.4, strain 10-3.6, strain 10-4.1, strain 18-6E, strain 4-2.2, strain 7-3.6, strain 8-3.1, strain 9-3.7, strain 9-4.1, strain 9-6.2, strain C-43, strain C-56, strain C-59, strain C-72,. strain C-84, strain C-85, strain CeS-2, strain CS-4, strain New Zealand 1-7E, strain NY-1,* and *strain Panama53.*

Exemplary Bodomorpha species for use in the present invention include *Bodomorpha minima, Bodomorpha prolixa, Bodomorpha sp. HFCC106, Bodomorpha sp. HFCC55, Bodomorpha sp. HFCC57, Bodomorpha sp. HFCC92, Bodomorpha sp. Panama105, Bodomorpha sp. Panama115,* and combinations thereof.

Exemplary Sandona species for use in the present invention include *Sandona afra, Sandona aestiva, Sandona aporians, Sandona campae, Sandona dimutans, Sandona dismilis, Sandona erratica, Sandona limna, Sandona mutans, Sandona pentamutans, Sandona similis, Sandona tetramutans, Sandona tetrasimilis, Sandona ubiquita,* and combinations thereof.

As is exemplified herein below, very good results were obtained with a fertilizer comprising a *Rosculus* sp. in combination with a *Cercomonas* sp. Accordingly, in a preferred aspect, a species from the genus *Cercomonas* is used as additional protozoa, for example one or more selected from the group consisting of *Cercomonas lenta, Cercomonas agilis, Cercomonas alexieffi, Cercomonas ambigua, Cercomonas bodo, Cercomonas braziliensis, Cercomonas celer, Cercomonas clavideferens, Cercomonas crassicauda, Cercomonas dactyloptera, Cercomonas deformans, Cercomonas diparavarians, Cercomonas edax, Cercomonas effusa, Cercomonas elliptica, Cercomonas fastiga, Cercomonas gigantica, Cercomonas granulatus, Cercomonas hederae, Cercomonas hiberna, Cercomonas kiaerdammane, Cercomonas kolskia, Cercomonas laciniaegerens, Cercomonas laeva, Cercomonas lata, Cercomonas lenta, Cercomonas longicauda, Cercomonas magna, Cercomonas media, Cercomonas metabolicus, Cercomonas mtoleri, Cercomonas mutans, Cercomonas nebulosa, Cercomonas paraglobosa, Cercomonas parambigua, Cercomonas paravarians, Cercomonas parincurva, Cercomonas parva, Cercomonas phylloplana, Cercomonas pigra, Cercomonas plasmodialis, Cercomonas primitiva, Cercomonas radiata, Cercomonas rapida, Cercomonas ricae, Cercomonas rotunda, Cercomonas simplex, Cercomonas sphagnicola, Cercomonas vibrans, Cercomonas vacuolata, Cercomonas wylezichi, Cercomonas zhukovi, Cercomonas sp. ATCC 50317, Cercomonas sp. ATCC 50318, Cercomonas sp. ATCC 50319.* In a specific aspect, the fertilizer composition comprises *Cercomonas lenta.*

The one or more additional protozoa cysts can be used in any suitable relative ratio to the *Rosculus* cysts. In one embodiment, the ratio is between about 1:20 to 20:1, 1:10 to 10:1, 1:5 to 5:1, 1:3 to 3:1, and about 1:2 to 2:1. In one embodiment, the different protozoa are used in about equal (e.g. 1:1) amounts.

The total amount of protozoa cysts in a fertilizer will depend on many variables, including but not limited to the vehicle to be used, the plant to be treated with the composition, the protozoa and bacteria to be used, used, soil moisture etc. Typically, the protozoa are typically present in a total amount of 10exp1 to 10exp7 cysts per gram of composition, preferably a total of 10exp2 to 10exp4 cysts per gram of composition, more preferably 10exp2 to 10exp3 cysts per gram of composition.

In one aspect, the fertilizer comprises about equal amounts of *Rosculus* cysts and one or more additional protozoa cysts. For example, about 10 to 1000 *Rosculus* cysts and about 10 to 1000 cysts of either *Neocercomonas* sp., *Cercomonas* sp., *Sandona* sp. and *Bodomorpha* sp. per gram of fertilizer. Preferred fertilizer compositions are those comprising about 10 to 1000 *Rosculus* cysts and about 10 to 1000 *Cercomonas* cysts per gram of fertilizer.

Any suitable ratio of protozoa to bacteria can be present in the bacteria-containing compositions of the invention. In one non-limiting embodiment, the protozoa:bacteria in the composition is between about 1 : 50 to 1 : 10.000. In various further embodiments, the ratio is between about 1 : 50 to 1 : 5000, 1 : 50 to 1 : 2500, 1 : 50 to 1 : 1000, 1 : 50 to 1 : 500, 1 : 100 to 1 : 10.000, 1 : 250 to 1 : 10.000, 1 : 500 to 1 : 10.000, 1 : 1000 to 1 : 10.,000, 1 : 100 to 1 : 5000, 1 : 100 to 2500, 1 : 100 to 1 : 1000, 1 : 250 to 1 : 10,000, 1 : 250 to 1 : 5000, 1 : 250 to 1 : 2500, 1 : 500 to 1 : 10.000, 1 : 500 to 1 : 5000, and about 1 : 1000 to 1 : 10.000.

Encystment of protozoa can be accomplished in various ways, for example by reducing the bacterial food source (e.g. *Escherichia coli* or *Klebsiella pneumoniae*) for protozoa that are grown in mono- or polyxenic cultures, or by depleting nutrients in the liquid growth medium for protozoa grown in axenic cultures (Neff et al. 1964). Protozoa can be grown in different types of commercially available growth medium but rapid and synchronous encystment is found in growth media that support rapid population growth (i.e. short generation times).

Encystation can also be induced by increasing the osmolarity of the growth medium through the addition of for example sodium chloride or glucose. The corresponding environmental condition behind this phenomenon is probably a loss of water from the soil due to evaporation. Once the encystment process is completed, the cysts can be harvested from the encystment medium and freeze-dried for preservation.

Accordingly, the invention also relates to a method for providing a fertilizer composition, comprising the steps of:
a) mixing organic sources of nitrogen, phosphate and potassium in the desired ratio;
b) providing a culture of a *Bacillus* species and inducing cyst- or spore-formation , preferably through fermentation;
c) providing a culture of *Rosculus* and, optionally, one or more of the additionally selected protozoa, and inducing encystation (e.g. by removing the bacterial food source in monoxenic or polyxenic cultures, by natural depletion of the bacterial food source, by increasing the osmolarity of the growth medium or by transferring the protozoa from a growth medium to an encystation medium for axenic cultures; and
d) preparing a granular, powdered or pelleted fertilizer from a mixture of the *Bacillus* spores or cysts, the protozoan cysts and the
   organic components obtained in (a); or by applying the *Bacillus* spores or cysts, and the protozoan cysts to granular, powdered or pelleted fertilizer prepared from the mixture of organic components obtained in (a).

Granules of an organic fertilizer can be produced by methods known in the art. For example, WO2012/102641 describes a method for producing granulated organo-mineral fertilizers from organic waste materials. It involves mixing the organic waste materials, removing mechanical impurities, mixing with the addition of mineral components (NB. no mineral components are added to organic fertilizers), grinding, decontaminating, homogenizing, granulating and drying.

According to the conventional fertilizer standards, the chemical makeup or analysis of fertilizers is expressed in percentages (by weight) of the essential primary nutrients nitrogen, phosphate and potassium. More specifically, when expressing the fertilizer formula, the first figure represents the percent of nitrogen expressed on the elemental basis as "total nitrogen" (N), the second figure represent the percent of phosphate, sometimes expressed on the oxide basis as "available phosphoric acid" (P₂O₅), and the third figure represents the percent of potassium, sometimes expressed on the oxide basis as "available potassium oxide" (K₂O). This expression is otherwise known as N-P-K.

An aspect of the present invention allows fertilizer formulations to be customized with respect to levels of N-P-K to suite various plants or soil conditions. Listed in Table 2 are some of the many N-P-K variations that are possible within the scope of the present invention. By mixing different sources of organic materials, a wide range of fertilizers with varying N-P-K values can be formulated. Depending on the application, the amount of nitrogen, phosphate and potassium can range from 0 to 20%. In one embodiment, the fertilizer composition of the invention is of the formula NPK 7-6-6 . In another embodiment, it is of the formula 9-3-5. In yet another embodiment it is of the formula 7-3-4.

**Table 2: N-P-K values of different raw organic materials that can be used for the production of organic fertilizers.**

| ***Raw material*** | ***N-P-K value*** |
|---|---|
| Hair meal | 14-0-0 |
| Feather meal | 13-0-0 |
| Meat meal | 8-4-0 |
| Bone meal | 6-10-0 |
| Cottonseed meal | 6-10-0 |
| Soybean meal | 7-2-1 |

In one embodiment, raw materials, such as dried feather meal and meat meal are blended (in no specific order) and then conveyed into a granulator where they are pressed in the desired granule size. The desired size may range from a fine powder to granules ranging in size from about < 1 mm to approximately 1 cm. After pressing, an aqueous suspension of bacterial spores and cysts and protozoan cysts is sprayed on the resolving fertilizer. In another embodiment, the bacterial spores or cysts and the protozoan cysts are mixed in a powdered or liquid form with the organic components before they are granulated.

A fertilizer composition may include further useful ingredients, such as a stabilizer, bulking agent, and/or additional microorganisms. In one embodiment, the composition comprises, in addition to the selected bacteria and protozoa, one or more selected from the group of algae, fungi and actinomycetes. Preferred endomycorrhizal fungi include *Glomus* spp., such as *Glomus constrictum, Glomus fasciculatum, Glomus geosporum, Glomus intraradices, Glomus tortuosum,* and mixtures thereof.

A still further embodiment relates to a method for growing a plant, comprising applying to the soil in which the plant grows a (granular) fertilizer composition according to the invention. The amount and frequency of fertilizer to be applied will depend on various factors, e.g. type of plant, developmental stage, other growth conditions and the like. Typically, the amount of the fertilizer is effective to enhance growth such that fertilized plants exhibit an increase in growth, increased leaf area, improved flowering, an increase in yield, an increase in root length and/or root mass when compared to unfertilized plants. The suitable application rates vary according to the type of seed or soil, the type of crop plants, the amounts of phosphorus and/or micronutrients present in the soil or added thereto, etc. A suitable rate can be found by simple trial and error experiments for each particular case. In one aspect, the fertilizer is added in an amount of 10 to 5000 kg per ha. Also provided herein is a method for enhancing the mineralization process in a soil, comprising applying a sufficient amount of fertilizer composition of the invention.

Soil is made up of many components. A significant percentage of most soil is clay. Organic matter, while a small percentage of most soils, is also important for several reasons. Both of these soil fractions have a large number of negative charges on their surface, thus they bind cation elements. At the same time, they also repel anion nutrients. The cation exchange capacity (CEC) value of soil, as reported by nearly all soil testing laboratories, is a calculated value that is an estimate of the soils ability to attract, retain, and exchange cation elements. The CEC is an inherent soil characteristic and it influences the soil's ability to hold onto essential nutrients and provides a buffer against soil acidification. Soils with a higher clay fraction tend to have a higher CEC. Organic matter has a very high CEC. Sandy soils rely heavily on the high CEC of organic matter for the retention of nutrients in the topsoil. The CEC is typically reported in millequivalents per 100 grams of soil (meq/100g). Larger CEC values indicate that a soil has a greater capacity to hold cations.

It was surprisingly found by the present inventors that the specific combination of bacteria and protozoa disclosed herein had good results when applied to both sandy and clay soils.

In one embodiment, the invention provides a method for growing a plant, preferably an ornamental plant, grass or a vegetable, comprising applying a fertilizer composition according to the invention in or to the soil in which the plant grows. The soil can be both a clay or a sandy soil. For example, a fertilizer composition comprising *B. subtilis* in combination with a *Rosculus* species is used for growing a grass (e.g. *Lolium perenne*) on a sandy soil collected from a garden. In another embodiment, the soil is a sandy or clay soil and the fertilizer comprises a *Rosculus* sp. and a *Cercomonas* sp. For example, a fertilizer composition comprising *B. amyloliquefaciens*, a *Rosculus* sp. and a *Cercomonas* species is used for growing a grass (e.g. *Lolium perenne*) on either a clay or a sandy soil.

The invention is exemplified by the following non-limiting examples.

### Example 1: Preparation of exemplary fertilizers

The basic organic fertilizer used for the field trials described herein below is commercially available and has a N-P-K of 9-3-5. Two different species of protozoa were grown in 1 liter Erlenmeyer flasks in a diluted phosphate buffer (Page's Amoeba Saline) supplemented with an *Escherichia coli* suspension. Cysts were formed naturally when food was depleted. The cysts were sieved from the growth medium and stored at 4 °C. The basic fertilizer was then supplemented with different doses of cysts (i.e. 10, 100 and 1000 cysts per gram of fertilizer) of one or both species. A total of 10 different fertilizer formulations were prepared. The specifications of the fertilizers used for the trials are shown in table 3.

**Table 3: Specifications of fertilizers used for trials**

| **Product specifications** | | |
|---|---|---|
| **Basic fertilizer** | | |
| N-P-K rating | 9-3-5 | |
| % Organic matter | 60% | |
| *Bacillus sp.* spore count | 10exp6 CFU / gram | |
| | | |
| Granule diameter | 0.01 - 5 mm | |
| Recommended use rate for lawns | 1 kg / 10m² | |

| **Protozoa additions** | | |
|---|---|---|
| Composition | Protozoa species | Cysts / gram of fertilizer |
| 1 | NOP (No Protozoa) | - |
| 2 | SP1 - *Cercomonas* sp. | 10 |
| 3 | SP1 - *Cercomonas* sp. | 100 |
| 4 | SP1 - *Cercomonas* sp. | 1000 |
| 5 | SP2 - *Rosculus* sp. | 10 |
| 6 | SP2 - *Rosculus* sp. | 100 |
| 7 | SP2 - *Rosculus* sp. | 1000 |
| 8 | SP1 + SP2 - *Cercomonas* sp. + *Rosculus* sp. | 5 + 5 |
| 9 | SP1 + SP2 - *Cercomonas* sp. + *Rosculus* sp. | 50 + 50 |
| 10 | SP1 + SP2 - *Cercomonas* sp. + *Rosculus* sp. | 500 + 500 |

### Example 2

The purpose of this trial was to determine the effects of the fertilizer compositions described in Table 3 on the growth of *Lolium perenne. A* sandy soil (8% clay, 8% silt, 84% sand) was collected from the northeast of The Netherlands. The soil had a pH of 6.0 and the organic matter content of the soil was 6.5%. The CEC was 58 mmol+/kg and soil life derived nitrogen was 34 mg N/kg soil.

The soil was transferred into plastic containers which were placed in a climate chamber where temperatures between 10 °C and 15 °C were maintained for the duration of the trial. There were 5 repetitions for each fertilizer composition. *Lolium perenne* was sown at a rate of 20 g/m². The grass was allowed to grow for 3 weeks before it was cut back to a length of 3 cm to ensure that the starting conditions for each container were the same before the onset of the trial. After these 3 weeks, the fertilizer compositions were applied at a rate of 100 g/m².

Three weeks after applying the fertilizer, the grass was cut back to a length of 3 cm. The remaining grass was allowed to grow for a final 3 weeks (i.e. 6 weeks after applying the fertilizer) before the above ground parts (i.e. shoots) and below ground parts (i.e. roots) were separated from each other and dried overnight at temperatures of 80°C and weighed.

### Results

There was a significant effect of fertilizer composition on the shoot biomass, F(9, 40) = 3.074, p = 0.007. All tested doses of the mixture SP1+SP2 and the highest doses of the two species separately caused significant increases in shoot biomass when compared to the NOP treatment (Table 4). The protozoa likely released nitrogen locked-up in biomass of the soil bacteria resulting in an increase in plant-available nitrogen and grass growth.

**Table 4: Effect of fertilizers supplemented with selected protozoa on Lolium perenne shoot dry weight (mean ± standard error) measured 6 weeks after applying the fertilizer. The relative change compares the shoot dry weight of protozoa supplemented fertilizers with that of unsupplemented fertilizers (NOP). P-values of a post-hoc LSD test are shown in the last column.**

| **Protozoa** | **Cysts g⁻¹ fertilizer** | **DW (g) (mean ± s.e.)** | **Relative Change (%)** | **P** |
|---|---|---|---|---|
| NOP | - | 0.268 ± 0.011 | - | - |
| SP1 | 10 | 0.273 ± 0.004 | 1.9 | 0.715 |
| SP1 | 100 | 0.278 ± 0.012 | 3.6 | 0.485 |
| SP1 | 1000 | 0.302 ± 0.009 | 12.5 | 0.018 |
| SP2 | 10 | 0.281 ± 0.012 | 4.8 | 0.345 |
| SP2 | 100 | 0.286 ± 0.005 | 6.7 | 0.194 |
| SP2 | 1000 | 0.296 ± 0.006 | 10.4 | 0.046 |
| SP1 + SP2 | 10 | 0.273 ± 0.010 | 1.8 | 0.726 |
| SP1 + SP2 | 100 | 0.309 ± 0.009 | 15.2 | 0.005 |
| SP1 + SP2 | 1000 | 0.318 ± 0.013 | 18.4 | 0.001 |

The increase in shoot biomass was accompanied by a significant reduction in the root/shoot ratio of the grass, F(9,38) = 4.879, p = 0.000. (Table 5). A reduction in the root/shoot ratio is often described as a response to more favorable growth conditions, which could easily have been caused by the increased availability of nitrogen and other nutrients.

**Table 5: Effect of fertilizers supplemented with selected protozoa on the root/shoot ratio of Lolium perenne (mean ± standard error) measured 6 weeks after applying the fertilizer. The relative change compares the root/shoot ratio of protozoa supplemented fertilizers with that of unsupplemented fertilizers (NOP). P-values of a post-hoc LSD test are shown in the last column.**

| **Protozoa** | **Cysts g⁻¹ fertilizer** | **Root/shoot ratio (mean ± s.e.)** | **Relative Change (%)** | **P** |
|---|---|---|---|---|
| NOP | - | 2.7 ± 0.4 | - | - |
| SP1 | 10 | 2.4 ± 0.1 | - 13.2 | 0.258 |
| SP1 | 100 | 2.6 ± 0.4 | - 4.6 | 0.704 |
| SP1 | 1000 | 1.7 ± 0.1 | - 38.7 | 0.002 |
| SP2 | 10 | 2.3 ± 0.2 | - 14.5 | 0.188 |
| SP2 | 100 | 2.6 ± 0.3 | - 5.9 | 0.612 |
| SP2 | 1000 | 1.6 ± 0.1 | - 41.1 | 0.001 |
| SP1 + SP2 | 10 | 2.0 ± 0.1 | - 25.5 | 0.038 |
| SP1 + SP2 | 100 | 1.5 ± 0.1 | - 46.4 | 0.000 |
| SP1 + SP2 | 1000 | 1.5 ± 0.1 | - 46.7 | 0.000 |

Protozoa species differ in their ability or preference to graze on *Bacillus* bacteria. The introduction of certain protozoa may therefore relieve competition from the *Bacillus* that are in the fertilizer resulting in an improved establishment of these bacteria in the soil. To test this hypothesis, the *Bacillus* colonization on the roots was determined. Results are shown in Table 6. Protozoa have a significant effect on Bacillus colonization, F (9, 36) = 4.628, p = 0.000. The highest doses of SP2 and the mixture of SP1 and SP2 resulted in an increase of *Bacillus* colonization of up to 370%. Because the *Bacillus* bacteria play an important role in the mineralization of the fertilizer, it is likely that the observed increases in shoot biomass and the reduction in root/shoot ratio are caused by an improved survival of the *Bacillus* bacteria in the soil.

**Table 6: Effect of fertilizers supplemented with selected protozoa on colonization of Bacillus bacteria (log transformed) on the roots of Lolium perenne measured 6 weeks after applying the fertilizer. The relative change compares the untransformed Bacillus count of protozoa supplemented fertilizers with that of unsupplemented fertilizers (NOP). P-values of a post-hoc LSD test of the log transformed data are shown in the last column.**

| **Protozoa** | **Cysts g⁻¹ fertilizer** | **Log *Bacillus* g root dw ⁻¹ (mean ± s.e.)** | **Relative Change (%)** | **P** |
|---|---|---|---|---|
| NOP | - | 5.83 ± 0.03 | - | - |
| SP1 | 10 | 5.96 ± 0.09 | 43.6 | 0.567 |
| SP1 | 100 | 5.36 ± 0.20 | - 52.2 | 0.034 |
| SP1 | 1000 | 6.06 ± 0.10 | 77.1 | 0.361 |
| SP2 | 10 | 6.03 ± 0.07 | 63.2 | 0.377 |
| SP2 | 100 | 5.74 ± 0.17 | - 0.8 | 0.657 |
| SP2 | 1000 | 6.37 ± 0.20 | 377.4 | 0.017 |
| SP1 + SP2 | 10 | 5.51 ± 0.22 | -34.1 | 0.157 |
| SP1 + SP2 | 100 | 5.78 ± 0.19 | 9.0 | 0.822 |
| SP1 + SP2 | 1000 | 6.39 ± 0.18 | 368.1 | 0.013 |

### Example 3

A trial similar to the one described in Example 2 was performed on a clay soil (30% clay, 23% silt, 37% sand). The soil was collected from the central part of The Netherlands and had a pH of 7.0. The organic matter content of the soil was 7.1%. The CEC was 310 mmol+/kg and soil life derived nitrogen was 44 mg N/kg soil.

There was a significant effect of fertilizer composition on the shoot biomass, F (9, 40) = 4.203, p = 0.001. As was found in example 2, all doses of mixture SP1+SP2 and the highest dose of SP2 alone resulted in significant increases in shoot growth. No significant effects were found for SP1 alone (Table 7).

**Table 7: Effect of fertilizers supplemented with selected protozoa on Lolium perenne shoot dry weight (mean ± standard error) measured 6 weeks after applying the fertilizer. The relative change compares the shoot dry weight of protozoa supplemented fertilizers with that of unsupplemented fertilizers (NOP). P-values of a post-hoc LSD test are shown in the last column.**

| **Protozoa** | **Cysts g⁻¹ fertilizer** | **DW (g) (mean ± s.e.)** | **Relative Change (%)** | **P** |
|---|---|---|---|---|
| NOP | - | 0.303 ± 0.014 | - | - |
| SP1 | 10 | 0.316 ± 0.015 | 4.2 | 0.435 |
| SP1 | 100 | 0.303 ± 0.006 | -0.2 | 0.970 |
| SP1 | 1000 | 0.327 ± 0.014 | 8.0 | 0.138 |
| SP2 | 10 | 0.293 ± 0.003 | -3.3 | 0.535 |
| SP2 | 100 | 0.295 ± 0.011 | -2.6 | 0.628 |
| SP2 | 1000 | 0.345 ± 0.009 | 13.9 | 0.012 |
| SP1 + SP2 | 10 | 0.321 ± 0.010 | 6.0 | 0.262 |
| SP1 + SP2 | 100 | 0.364 ± 0.016 | 20.2 | 0.000 |
| SP1 + SP2 | 1000 | 0.336 ± 0.007 | 10.8 | 0.048 |

The addition of protozoa to the basic fertilizer had a significant effect on the root/shoot ratio of the grass, F(9, 37) = 2.833, p = 0.012. The protozoa generally cause a decreases in the root/shoot ratio (Table 8). The synergistic effects of the mix SP1+SP2 that were found in both the present and the previously described trial, are interesting. The intermediate dose of mixture creates a similar or even a bigger decrease in the root/shoot ratio as the highest dose of the two species separate. No significant reductions in the root/shoot ratio for SP1 alone were found.

**Table 8: Effect of fertilizers supplemented with selected protozoa on the root/shoot ratio of Lolium perenne (mean ± standard error) measured 6 weeks after applying the fertilizer. The relative change compares the root/shoot ratio of protozoa supplemented fertilizers with that of unsupplemented fertilizers (NOP). P-values of a post-hoc LSD test are shown in the last column.**

| **Protozoa** | **Cysts g⁻¹ fertilizer** | **Root/shoot ratio (mean ± s.e.)** | **Relative Change (%)** | **P** |
|---|---|---|---|---|
| NOP | - | 2.4 ± 0.2 | - | - |
| SP1 | 10 | 2.5 ± 0.5 | 5.2 | 0.743 |
| SP1 | 100 | 2.9 ± 0.4 | 20.5 | 0.195 |
| SP1 | 1000 | 2.3 ± 0.2 | -3.2 | 0.842 |
| SP2 | 10 | 2.2 ± 0.3 | -9.7 | 0.538 |
| SP2 | 100 | 1.9 ± 0.1 | -22.3 | 0.159 |
| SP2 | 1000 | 2.3 ± 0.2 | -3.2 | 0.838 |
| SP1 + SP2 | 10 | 1.6 ± 0.2 | -32.8 | 0.042 |
| SP1 + SP2 | 100 | 1.4 ± 0.1 | -40.3 | 0.057 |
| SP1 + SP2 | 1000 | 1.5 ± 0.1 | -36.2 | 0.026 |

### REFERENCES

Alphei, J., Bonkowski, M. and Scheu, S. 1996. Protozoa, Nematoda and Lumbricidae in the rhizosphere of Hordelymus europaeus (Poaceae): faunal Interactions, response of microorganisms and effects on plant growth. Oecologia 106: 111-126.
Bonkowski, M. and Brandt, F. 2002. Do soil protozoa enhance plant growth by hormonal effects? Soil Biology & Biochemistry 34: 1709-1715.
Griffiths, B.S. 1989. Enhanced nitrification in the presence of bacteriophagous protozoa. Soil Biology and Biochemistry. 21: 1045-1051. Müller, M.S., Scheu, S. and Jousset, A. 2013. Protozoa drive the dynamics of culturable biocontrol bacterial communities. PloS ONE 8: e66200.
Neff, R.J., Ray, S.A., Benton, W.F., Wilborn, M. 1964. Induction of synchronous encystment (differentiation) in Acanthamoeba sp. In: Methods in cell physiology. Vol. 1. Prescott, D.M. (Eds). Academic Press Inc., New York, The United States. Pp. 55-83.
Rønn, R., McCaig, A.E., Griffiths, B.S. and Prosser, J.I. 2002. Impact of protozoan grazing on bacterial community structure in soil microcosms. Applied and Environmental Microbiology 68: 6094-6105.
Verhagen, F.J.M., Laanbroek, H.J. and Woldendorp, J.W. 1995. Competition for ammonium between plant roots and nitrifying and heterotrophic bacteria and the effects of protozoan grazing. Plant and soil 170: 241-250.

## Claims

1. A fertilizer composition in a granular, powdered or pelleted form, comprising (i) an organic source of nitrogen, phosphorus and/or potassium; (ii) Plant-Growth Promoting Rhizobacteria (PGPR) in the form of spores or cysts, wherein the PGPR is a *Bacillus* species, and (iii) protozoa in the form of cysts, wherein the protozoa belong to the genus *Rosculus.*

2. Fertilizer composition according to claim 1, comprising cysts of a *Rosculus* sp. in combination with cysts of one or more protozoa selected from the group consisting of *Neocercomonas* sp., *Cercomonas* sp., *Sandona* sp. and *Bodomorpha* sp.

3. Fertilizer composition according to claim 2, comprising a *Rosculus* sp. in combination with a *Cercomonas* sp.

4. Fertilizer composition according to any one of the preceding claims, comprising *Bacillus subtilis, Bacillus pumilus, Bacillus amyloliquefaciens, Bacillus megaterium, Bacillus mycoides, Bacillus cereus, Bacillus thuringiensis* and/or *Bacillus licheniformis;*

5. Fertilizer composition according to any one of the preceding claims, further comprising one or more PGPR that belongs to the genera *Acinetobacter, Arthrobacter, Azoarcus, Azospirillum, Azotobacter, Beijerinckia, Bradyrhizobium, Burkholderia, Enterobacter, Frankia, Gluconacetobacter, Klebsiella, Pseudomonas, Rhizobium, Serratia* or *Streptomyces.*

6. Fertilizer composition according to any of the preceding claims wherein the *Bacillus* species are present in a total amount of 10exp3 to 10exp10, preferably 10exp4 to 10exp8, spores or colony forming units per gram of composition.

7. Fertilizer composition according to any of the preceding claims, wherein the protozoa are present in a total amount of 10exp1 to 10exp7 cysts per gram of composition,preferably wherein the protozoa are present in a total amount of 10exp1 to 10exp4 cysts per gram of composition.

8. Fertilizer composition according to claim 7, comprising 10exp1 to 10exp4 *Rosculus* sp. cysts, and 10exp1 to 10exp4 *Cercomonas* cysts per gram of composition.

9. Fertilizer composition to any of the preceding claims, comprising 10exp3 to 10exp10 spores or colony forming units of a *Bacillus* sp., 10exp1 to 10exp3 *Cercomonas* sp. cysts, and 10exp1 to 10exp3 *Rosculus* sp. cysts per gram of composition.

10. Fertilizer composition to any of the preceding claims, wherein the nitrogen, phosphate and/or potassium are derived from organic sources, preferably hoof meal, hair meal, feather meal, meat meal, bone meal, cottonseed meal and/or soybean meal.

11. Fertilizer composition according to claim 10, wherein the amount of nitrogen, phosphate and potassium can range from 0 to 20% depending on the application.

12. Fertilizer composition according to any of the preceding claims, wherein the fertilizer has a granular form, preferably with granules ranging in size from 0.01 mm to 5 mm.

13. A method for providing a fertilizer composition according to any of claims 1 to 12, comprising the steps of:
a) mixing organic sources of nitrogen, phosphate and potassium in the desired ratio;
b) providing a culture of said PGPR and inducing cyst- or spore-formation, preferably through fermentation;
c) providing a culture of said protozoa and inducing encystation, preferably by removing the bacterial food source in monoxenic or polyxenic or by increasing the osmolarity of the growth medium or by transferring the protozoa from a growth medium to an encystation medium for axenic cultures; and
d) preparing a granular, powdered or pelleted fertilizer from a mixture of the PGPR spores or cysts, the protozoan cysts and the mixture of organic components obtained in (a); or by applying the PGPR spores or cysts, and the protozoan cysts to granular, powdered or pelleted fertilizer prepared from the mixture obtained in step (a).

14. A method for growing a plant, preferably an ornamental plant, grass or a vegetable, comprising applying a fertilizer composition according to any one of claims 1 to 12 in or to the soil in which the plant grows, preferably wherein the fertilizer is applied in or to the soil added in an amount of 10 to 5000 kg pro hectare.

15. Method according to claim 14, wherein the soil is a sandy soil or a clay soil.

## Patentansprüche

1. Düngemittelzusammensetzung in einer körnigen, pulverisierten oder pelletierten Form, umfassend (i) eine organische Quelle von Stickstoff, Phosphor und/oder Kalium; (ii) pflanzenwachstumsfördernde Rhizobakterien (PGPR) in der Form von Sporen oder Zysten, wobei das PGPR eine *Bazillus-*Spezies ist, und (iii) Protozoen in der Form von Zysten, wobei die Protozoen zur Gattung *Rosculus* gehören.

2. Düngemittelzusammensetzung nach Anspruch 1, umfassend Zysten einer *Rosculussp.* in Kombination mit Zysten einer oder mehrerer Protozoen ausgewählt aus der Gruppe bestehend aus *Neocercomonas* sp., *Cercomonas* sp., *Sandonasp.* und *Bodomorphasp.*

3. Düngemittelzusammensetzung nach Anspruch 2, umfassend eine *Rosculus* sp. in Kombination mit einer *Cercomonas* sp.

4. Düngemittelzusammensetzung nach einem der vorhergehenden Ansprüche, umfassend *Bacillus subtilis, Bacillus pumilus, Bacillus amyloliquefaciens, Bacillus megaterium, Bacillus mycoides, Bacillus cereus, Bacillus thuringiensis* und/oder *Bacillus licheniformis;*

5. Düngemittelzusammensetzung nach einem der vorhergehenden Ansprüche, ferner umfassend ein oder mehrere PGPR, die zu den Gattungen *Acinetobacter, Arthrobacter, Azoarcus, Azospirillum, Azotobacter, Beijerinckia, Bradyrhizobium, Burkholderia, Enterobacter, Frankia, Gluconacetobacter, Klebsiella, Pseudomonas, Rhizobium, Serratia* oder *Streptomyces* gehören.

6. Düngemittelzusammensetzung nach einem der vorhergehenden Ansprüche, wobei die *Bazillus*-Spezies in einer Gesamtmenge von 10exp3 bis 10exp10, vorzugsweise 10exp4 bis 10exp8, Sporen oder koloniebildenden Einheiten pro Gramm Zusammensetzung vorhanden sind.

7. Düngemittelzusammensetzung nach einem der vorhergehenden Ansprüche, wobei die Protozoen in einer Gesamtmenge von 10exp1 bis 10exp7 Zysten pro Gramm Zusammensetzung vorhanden sind, vorzugsweise wobei die Protozoen in einer Gesamtmenge von 10exp1 bis 10exp4 Zysten pro Gramm Zusammensetzung vorhanden sind.

8. Düngemittelzusammensetzung nach Anspruch 7, umfassend 10exp1 bis 10exp4 *Rosculus* sp. Zysten, und 10exp 1 bis 10exp4 *Cercomonas* Zysten pro Gramm Zusammensetzung.

9. Düngemittelzusammensetzung nach einem der vorhergehenden Ansprüche, umfassend 10exp3 bis 10exp10 Sporen oder koloniebildende Einheiten einer *Bazillus* sp., 10exp1 bis 10exp3 *Cercomonas* sp. Zysten und 10exp1 bis 10exp3 *Rosculus* sp.-Zysten pro Gramm Zusammensetzung.

10. Düngemittelzusammensetzung nach einem der vorhergehenden Ansprüche, wobei der Stickstoff, das Phosphat und/oder das Kalium aus organischen Quellen stammen, vorzugsweise Hufmehl, Haarmehl, Federmehl, Fleischmehl, Knochenmehl, Baumwollsamenmehl und/oder Sojabohnenmehl.

11. Düngemittelzusammensetzung nach Anspruch 10, wobei die Menge an Stickstoff, Phosphat und Kalium abhängig von der Anwendung im Bereich von 0 bis 20 % reichen können.

12. Düngemittelzusammensetzung nach einem der vorhergehenden Ansprüche, wobei das Düngemittel eine körnige Form hat, vorzugsweise mit Körnchen reichend in Größe von 0,01 mm bis 5 mm.

13. Verfahren zum Bereitstellen einer Düngemittelzusammensetzung nach einem der Ansprüche 1 bis 12, umfassend die Schritte von:
a) Mischen organischer Quellen von Stickstoff, Phosphat und Kalium in dem gewünschten Verhältnis;
b) Bereitstellen einer Kultur des PGPR und Induzieren der Zysten- oder Sporenbildung, vorzugsweise durch Fermentation;
c) Bereitstellen einer Kultur der Protozoen und Induzieren einer Enzystation, vorzugsweise durch Entfernen der bakteriellen Nahrungsquelle in Monoxen oder Polyxen oder durch Erhöhen der Osmolarität des Wachstumsmediums oder durch Übertragen der Protozoen von einem Wachstumsmedium auf ein Enzystationsmedium für axenische Kulturen; und
d) Herstellen eines körnigen, pulverisierten oder pelletierten Düngemittels aus einer Mischung der PGPR-Sporen oder -Zysten, der Protozoen-Zysten und der Mischung der organischen Komponenten, erhalten in a); oder durch Applizieren der PGPR-Sporen oder -Zysten, und der Protozoen-Zysten auf körniges, pulverisiertes oder pelletiertes Düngemittel, hergestellt aus der Mischung, erhalten in Schritt b).

14. Verfahren zum Züchten einer Pflanze, vorzugsweise einer Zierpflanze, eines Grases oder eines Gemüses, umfassend Applizieren einer Düngemittelzusammensetzung nach einem der Ansprüche 1 bis 12 in oder auf den Boden, in dem die Pflanze wächst, vorzugsweise wobei der Dünger, hinzugefügt in einer Menge von 10 bis 5000 kg pro Hektar in oder auf den Boden appliziert wird.

15. Verfahren nach Anspruch 14, wobei der Boden ein sandiger Boden oder ein Lehmboden ist.

## Revendications

1. Une composition d'engrais sous forme granulaire, pulvérulente ou sous forme de pellets, comprenant
(i) une source organique d'azote, de phosphore et/ou de potassium;
(ii) des Rhizobactéries favorisant la croissance des plantes (PGPR) sous forme de spores ou de cystes, où le PGPR est une espèce *Bacillus,* et
(iii) des protozoaires sous forme de poches lysigènes ou cystes, où les protozoaires appartiennent au genre *Rosculus.*

2. Composition d'engrais selon la revendication 1, comprenant des cystes d'une *Rosculus* sp. en combinaison avec des cystes d'un ou plusieurs protozoaires choisis dans le groupe constitué de *Neocercomonas* sp., *Cercomonas* sp., *Sandona* sp. et *Bodomorpha* sp.

3. Composition d'engrais selon la revendication 2, comprenant un *Rosculus* sp. en combinaison avec un *Cercomonas* sp.

4. Composition d'engrais selon l'une quelconque des revendications précédentes, comprenant *Bacillus subtilis, Bacillus pumilus, Bacillus amyloliquefaciens, Bacillus megaterium, Bacillus mycoides, Bacillus cereus, Bacillus thuringiensis* et/ou *Bacillus licheniformis.*

5. Composition d'engrais selon l'une quelconque des revendications précédentes, comprenant en outre un ou plusieurs PGPR appartenant aux genres *Acinetobacter, Arthrobacter, Azoarcus, Azospirillum, Azotobacter, Beijerinckia, Bradyrhizobium, Burkholderia, Enterobacter, Frankia, Gluconacetobacter, Klebsiella, Pseudomon, Rhizobium, Serratia* ou *Streptomyces.*

6. Composition d'engrais selon l'une quelconque des revendications précédentes, dans laquelle les espèces *Bacillus* sont présentes en une quantité totale de 10exp3 à 10exp10, de préférence 10exp4 à 10exp8, de spores ou d'unités formant des colonies par gramme de composition.

7. Composition d'engrais selon l'une quelconque des revendications précédentes, dans laquelle les protozoaires sont présents en une quantité totale de 10exp1 à 10exp7 cystes par gramme de composition, de préférence dans laquelle les protozoaires sont présents en une quantité totale de 10exp1 à 10exp4 cystes par gramme de composition.

8. Composition d'engrais selon la revendication 7, comprenant 10exp1 à 10exp4 cystes de *Rosculus* sp., et 10exp1 à 10exp4 cystes de *Cercomonas* par gramme de composition.

9. Composition d'engrais selon l'une quelconque des revendications précédentes, comprenant 10exp3 à 10exp10 spores ou unités formant des colonies d'un *Bacillus* sp., 10exp1 à 10exp3 cystes de *Cercomonas* sp., et 10exp1 à 10exp3 cystes de *Rosculus* sp. par gramme de composition.

10. Composition d'engrais selon l'une quelconque des revendications précédentes, dans laquelle l'azote, le phosphate et/ou le potassium sont dérivés de sources organiques, de préférence de farine de sabot, farine de cheveux, farine de plumes, farine de viande, farine d'os, farine de graines de coton et/ou farine de soja.

11. Composition d'engrais selon la revendication 10, dans laquelle la quantité d'azote, de phosphate et de potassium peut aller de 0 à 20% selon l'application.

12. Composition d'engrais selon l'une quelconque des revendications précédentes, dans laquelle l'engrais a une forme granulaire, de préférence des granules dont la taille varie de 0,01 mm à 5 mm.

13. Un procédé pour fournir une composition d'engrais selon l'une quelconque des revendications 1 à 12, comprenant les étapes:
a) de mélange de sources organiques d'azote, de phosphate et de potassium dans le rapport souhaité;
b) de fourniture d'une culture dudit PGPR et induire la formation de cystes ou de spores, de préférence par fermentation;
c) de fourniture une culture desdits protozoaires et d'induction d'une enkystation, de préférence en éliminant la source alimentaire bactérienne en monoxèniques ou polyxéniques ou en augmentant l'osmolarité du milieu de croissance ou en transférant les protozoaires d'un milieu de croissance à un milieu d'enkystation pour les cultures axéniques; et
d) la préparation d'un engrais granulaire, pulvérulent ou sous forme de pellets à partir d'un mélange des spores ou cystes PGPR, les cystes protozoaires et le mélange de composants organiques obtenus en (a); ou en appliquant les spores ou cystes PGPR et les cystes protozoaires à l'engrais granulaire, pulvérulent ou sous forme de pellets préparé à partir du mélange obtenu à l'étape (a).

14. Un procédé de culture d'une plante, de préférence une plante ornementale, de l'herbe ou un légume, comprenant l'application d'une composition d'engrais selon l'une quelconque des revendications 1 à 12 dans ou sur le sol dans lequel la plante pousse, de préférence dans laquelle l'engrais est appliqué dans ou au sol ajouté à raison de 10 à 5000 kg par hectare.

15. Un procédé selon la revendication 14, dans lequel le sol est un sol sableux ou un sol argileux.
